# EUROPEAN PATENT APPLICATION

(11) **EP 2 571 262 A1**
(43) Date of publication of application: **20.03.2013**
(21) Application number: 11837534.4
(22) Date of filing: 20.10.2011
(51) Int. Cl.: H04N 7/15, G06T 7/20

(54) **METHOD AND DEVICE FOR PROCESSING IMAGE DISPLAY**

(30) Priority: 02.11.2010 CN
(71) Applicant: Huawei Device Co., Ltd., Longgang District Shenzhen Guangdong 518129 (CN)
(72) Inventor: FENG, Jinghua, Shenzhen 518129 (CN); MA, Jinyong, Shenzhen 518129 (CN); CHEN, Heyi, Shenzhen 518129 (CN)
(74) Representative: Pfenning, Meinig & Partner GbR
(86) International application number: PCT/CN2011/081070
(87) International publication number: WO 2012/059008

(57) **Abstract**

Embodiments of the present invention disclose a method and an apparatus for processing an image display, which relate to the field of image processing technologies and are invented for improving user experience in using a videoconferencing system The method includes: acquiring each frame image of the video source image; identifying whether a current frame image is the same as a previous relevant frame image of the current frame image among each frame image of the video source image; buffering the current frame image and the previous relevant frame image when the current frame image is different from the previous relevant frame image; and sending the buffered images to at least two display devices for displaying, respectively. The embodiments of the present invention mainly apply to a videoconferencing system.

## Description

This application claims priority to Chinese Patent Application No. 201010528108.X, filed with the Chinese Patent Office on November 2, 2010 and entitled "METHOD AND APPARATUS FOR PROCESSING IMAGE DISPLAY", which is incorporated herein by reference in its entirety.

### FIELD OF TECHNOLOGY

The present invention relates to the field of image processing technologies, and in particular to a method and an apparatus for processing an image display.

### BACKGROUND

Currently, on a site with a videoconferencing system, two or more display devices generally exist. These display devices either separately display images from different video sources or simultaneously display the same frame image from the same video source.

In the process of implementing the present invention, the inventor found that: In the prior art, displaying different frame images from the same video source on two or more display devices cannot be implemented, thereby significantly affecting user experience in using a videoconferencing system.

### SUMMARY

Embodiments of the present invention provide a method and an apparatus for processing an image display, which can improve user experience in using a videoconferencing system.

The embodiments of the present invention adopt the following technical solutions:
A method for processing an image display, including:
   acquiring each frame image of a video source image;
      identifying whether a current frame image is the same as a previous relevant frame image of the current frame image among each frame image of the video source image;
      buffering the current frame image and the previous relevant frame image when the current frame image is different from the previous relevant frame image; and
      sending the buffered images to at least two display devices for displaying, respectively.

An apparatus for processing an image display, including:
an image acquiring unit, configured to acquire each frame image of a video source image;
an image identifying unit, configured to identify whether a current frame image is the same as a previous relevant frame image of the current frame image among each frame image of the video source image;
an image buffering unit, configured to buffer the current frame image and the previous relevant frame image when the current frame image is different from the previous relevant frame image; and
an image display processing unit, configured to send the buffered images to at least two display devices for displaying, respectively.

According to the method and the apparatus for processing the image display provided in the embodiments of the present invention, a method for processing each frame image is determined by identifying whether the current frame image is the same as the previous relevant frame image of the current frame image among the acquired each frame image of the video source image, the current frame image and the previous relevant frame image are buffered when the current frame image is different from the previous relevant frame image, and then the buffered images are sent to at least two display devices for displaying, respectively. As can be seen from the above, after the method and the apparatus in the embodiments of the present invention are used, when the current frame image is different from the previous relevant frame image, the buffered images can be sent to at least two display devices for displaying, that is, when the current frame image is different from the previous relevant frame image, at least two display devices are capable of simultaneously displaying different frame images of the video source image. This meets the requirement that a user watches images with different content of the same video source image on different display devices, and improves user experience in using a videoconferencing system.

### BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art can derive other drawings from these accompanying drawings without creative efforts.
FIG. 1 is a flowchart of a method for processing an image display according to a first embodiment of the present invention;
FIG. 2 is a flowchart of a method for processing an image display according to a second embodiment of the present invention;
FIG. 3 is a flowchart of a method for processing an image display according to a third embodiment of the present invention;
FIG. 4 is a schematic diagram of an apparatus for processing an image display according to a fourth embodiment of the present invention; and
FIG. 5 is a structural diagram of an apparatus for processing an image display according to a fifth embodiment of the present invention.

### DETAILED DESCRIPTION

The following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

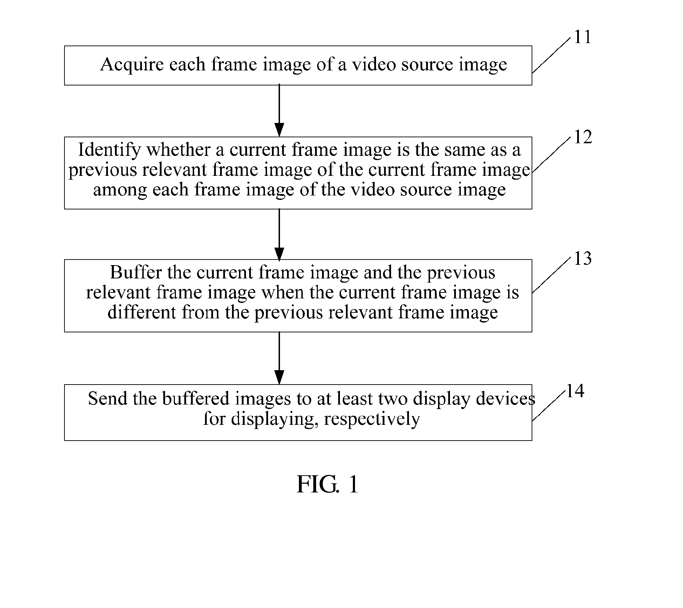

As shown in FIG. 1, a first embodiment of the present invention provides a method for processing an image display, including:
Step 11: Acquire each frame image of a video source image.

The image is sent frame by frame during a sending process. Therefore, when a receiver acquires the video source image, each frame image of the video source image is also acquired frame by frame.

Step 12: Identify whether a current frame image is the same as a previous relevant frame image of the current frame image among each frame image of the video source image.

In this embodiment of the present invention, according to the difference of the mapping between each frame image and a display device displaying the frame image, the previous relevant frame image may have different meanings. The previous relevant frame image may be understood as the previous frame image or the previous n frame images (n is an integer greater than 1) of the current frame image, and may be understood as an image displayed by the same display device as the current frame image; for example, the previous relevant frame image may be the previous n frame images of the current frame image among the images displayed by the same display device as the current frame image.

For example, assume that each frame image of the video source image is sent to any display device for displaying. When the current frame image is the m^{th} frame image, the previous relevant frame image is the (m-1)^{th} frame image or any one of previous frame images. For another example, assuming that each frame image of the video source image is sent to a specified display device for displaying, if there are three display devices A, B, and C, the first frame image is sent to display device A for displaying, the second frame data is sent to display device B for displaying, and the third frame image is sent to display device C for displaying. Then, similarly, the fourth frame image is sent to display device A for displaying, the fifth frame data is sent to display device B for displaying, and the sixth frame image is sent to display device C for displaying.... In this case, the first frame image may be regarded as the previous relevant frame image of the fourth frame image, the second frame image may be regarded as the previous relevant frame image of the fifth frame image, and the third frame image may be regarded as the previous relevant frame image of the sixth frame image....

In the process of identifying whether the current frame image is the same as the previous relevant frame image of the current frame image among each frame image of the video source image, identification may be performed by using one or a combination of the following several methods.

Method 1: Detect similarity of content between the current frame image and the previous relevant frame image. When the similarity is lower than a preset threshold, the current frame image is different from the previous relevant frame image; when the similarity is not lower than a preset threshold, the current frame image is the same as the previous relevant frame image.

The method for detecting the similarity of the content between the current frame image and the previous relevant frame image may adopt any method for detecting the image content in the prior art. For example, the detection may be performed by comparing pixel data of pixel points corresponding to two frame images to determine whether the two frame images are the same. Meanwhile, the preset threshold may be set to any value.

Take two display devices A and B as an example. Specify that each frame image of the video source image is firstly sent to display device A for displaying and then sent to display device B for displaying. In this example, the previous relevant frame image is the previous frame image or previous several frame images of the current frame image.

For the first frame image, because it has no previous frame image, no identification is performed on it. For the second frame image, the similarity of the content between the second frame image and the first frame image is detected. When the similarity is lower than the preset threshold, for example, 20%, the current frame image is different from the previous relevant frame image; when the similarity is not lower than a preset threshold, the current frame image is the same as the previous relevant frame image. For the third frame image, the similarity of the content between the third frame image and the first frame image is compared with the same detection method. For the fourth frame image, if the third frame image is the same as the first frame image, the similarity of the content between the fourth frame image and the second frame image is compared; otherwise, the similarity of the content between the fourth frame image and the first frame image is still compared.

Take the two display devices A and B as an example. Each frame image of the video source image is arbitrarily sent to the display devices A and B for displaying. In this example, the previous relevant frame image is the previous frame image or previous several frame images of the current frame image. For the first frame image, because it has no previous frame image, no identification is performed on it. For the second frame image, the similarity of the content between the second frame image and the first frame image is detected. For the third frame image, the similarity of the content between the third frame image and the first frame image or the second frame image may be compared, and the same detection method is used. For the fourth frame image, the similarity of the content between the fourth frame image and the first frame image, the second frame image, or the third frame image may be compared.

Method 2: Acquire identification information of the current frame image and identification information of the previous relevant frame image. When the identification information of the current frame image is the same as the identification information of the previous relevant frame image, the current frame image is the same as the previous relevant frame image; when the identification information of the current frame image is different from the identification information of the previous relevant frame image, the current frame image is different from the previous relevant frame image.

For example, a video source image sender may add a watermark to each frame image in the video source image, and image frames with the same content have the same watermark. Then, after each frame image of the video source image is acquired, the identification information of the current frame image and the identification information of the previous relevant frame image are acquired according to settings on each frame image by the sender. When the identification information of the current frame image (that is, the watermark information set by the video source image sender) is the same as the identification information of the previous relevant frame image (that is, the watermark information set by the video source image sender), the current frame image is the same as the previous relevant frame image; otherwise, the current frame image is different from the previous relevant image.

Method 3: Detect whether an invalid frame image exists between the current frame image and the previous relevant frame image. When an invalid frame image exists between the current frame image and the previous relevant frame image, the current frame image is different from the previous relevant frame image; when no invalid frame image exists, the current frame image is the same as the previous relevant frame image.

For example, the video source image sender may insert the invalid frame between image frames with different content in the video source image. Then, after each frame image of the video source image is acquired, whether an invalid frame image exists between the current frame image and the previous relevant frame image is detected according to settings on each frame image by the sender. When an invalid frame image exists between the current frame image and the previous relevant frame image, the current frame image is different from the previous relevant frame image; otherwise, the current frame image is the same as the previous relevant frame image.

Certainly, in this embodiment, other methods are available for determining whether the current frame image is the same as the previous relevant image, and the method described herein is exemplary.

Step 13: Buffer the current frame image and the previous relevant frame image when the current frame image is different from the previous relevant frame image.

Step 14: Send the buffered images to at least two display devices for displaying, respectively.

As can be seen from the above, after the method in the first embodiment of the present invention is used, when the current frame image is different from the previous relevant frame image, the buffered images can be sent to at least two display devices for displaying; that is, when the current frame image is different from the previous relevant frame image, at least two display devices are capable of simultaneously displaying different frame images of the video source image. This meets the requirement that a user watches images with different content of the same video source image on different display devices, and improves user experience in using a videoconferencing system.

Further, in the first embodiment, the sender may acquire and store a video source file before step 11 to lower the requirement for bandwidth on the system. Then, in a video conference, the identification information, sent by the sender, of each frame image of the video source image is received, and each frame image of the video source image is acquired according to the identification information, where the identification information may be the name of each frame image and the like.

For example, the following describes in detail the method for processing the image display in this embodiment of the present invention by displaying different content of the same video image on two display devices and three display devices.

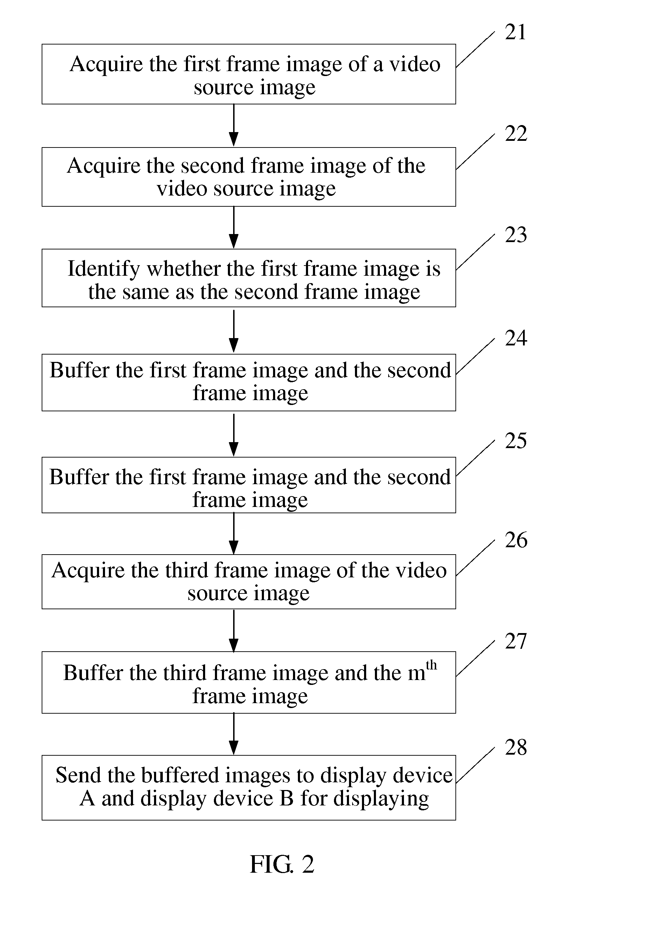

According to a method for processing an image display in a second embodiment, assuming that there are display device A and display device B, the received image frame is sent and displayed in the order of being firstly displayed on display device A and then being displayed on display device B. As shown in FIG. 2, the method for processing the image display according to the second embodiment of the present invention includes:
Step 21: Acquire the first frame image of a video source image.
Step 22: Acquire the second frame image of the video source image.
Step 23: Identify whether the first frame image is the same as the second frame image.

Any one or any combination of the methods described in the first embodiment may be used to perform identification.

Step 24: Buffer the first frame image and the second frame image when the first frame image is different from the second frame image. Discard the second frame image when the first frame image is the same as the second frame image to save storage resources, until the i^{th} frame image that is different from the first frame image in content is obtained. Herein, assume that the first frame image is different from the second frame image.

Step 25: Buffer the first frame image and the second frame image.

Step 26: Acquire the third frame image of the video source image.

Step 27: Identify whether the third frame image is the same as the first frame image. Buffer the third frame image when the third frame image is different from the first frame image. Discard the third frame image when the third frame image is the same as the first frame image, and acquire the fourth frame image. Herein, assuming that the third frame image is different from the first frame image, buffer the third frame image. Identify whether the fourth frame image is the same as the second frame image. Discard the fourth frame image when the fourth frame image is the same as the second frame image, until the image frame that is different from the second frame image in the content is received. Assuming that the image frame is the m^{th} frame image at this time, buffer the m^{th} frame image.

Repeat this step continuously until the video source image is received completely.

Step 28: Send the buffered images to display device A and display device B for displaying.

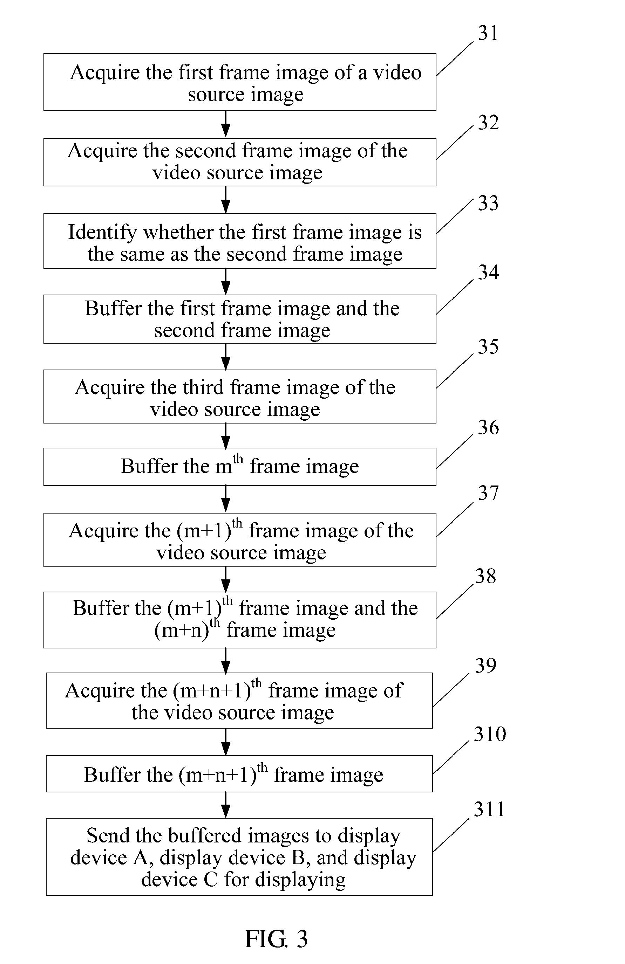

According to a method for processing an image display in a third embodiment, assuming that there are display device A, display device B, and display device C, the received image frame is sent and displayed in the order of being displayed first on display device A, then on display device B, and then on display device C. As shown in FIG. 3, the method for processing the image display according to the third embodiment of the present invention includes:
Step 31: Acquire the first frame image of a video source image.
Step 32: Acquire the second frame image of the video source image.
Step 33: Identify whether the first frame image is the same as the second frame image.

Any one or any combination of the methods described in the first embodiment may be used to perform identification.

Step 34: Buffer the first frame image and the second frame image when the first frame image is different from the second frame image. Discard the second frame image when the first frame image is the same as the second frame image to save storage resources, until the i^{th} frame image that is different from the first frame image in content is obtained. Herein, assume that the first frame image is different from the second frame image.

Step 35: Acquire the third frame image of the video source image.

Step 36: Identify whether the third frame image is the same as the second frame image. Buffer the third frame image when the third frame image is different from the second frame image. Discard the third frame image when the third frame image is the same as the second frame image, and acquire the fourth frame image. Herein, assume that the third frame image is the same as the second frame image. Identify whether the fourth frame image is the same as the second frame image. Discard the fourth frame image when the fourth frame image is the same as the second frame image, until the image frame that is different from the second frame image in the content is received. Assuming that the m^{th} frame image is different from the second frame image at this time, buffer the m^{th} frame image.

Step 37: Acquire the (m+1)^{th} frame image of the video source image.

Step 38: Identify whether the (m+1)^{th} frame image is the same as the first frame image. Buffer the (m+1)^{th} frame image when the (m+1)^{th} frame image is different from the first frame image. Discard the (m+1)^{th} frame image and acquire the (m+2)^{th} frame image when the (m+1)^{th} frame image is the same as the first frame image. Herein, assuming that the (m+1)^{th} frame image is different from the first frame image, buffer the (m+1)^{th} frame image.

Acquire the (m+2)^{th} frame image, and identify whether the (m+2)^{th} frame image is the same as the second frame image. Discard the (m+2)^{th} frame image when the (m+2)^{th} frame image is the same as the second frame image, until the image frame that is different from the second frame image in the content is received. Assuming that the (m+n)^{th} frame image is different from the second frame image at this time, buffer the (m+n)^{th} frame image.

Step 39: Acquire the (m+n+1)^{th} frame image of the video source image.

Step 310: Identify whether the (m+n+1)^{th} frame image is the same as the third frame image. Buffer the (m+n+1)^{th} frame image when the (m+n+1)^{th} frame image is different from the third frame image. Discard the (m+n+1)^{th} frame image and acquire the (m+n+2)^{th} frame image when the (m+n+1)^{th} frame image is the same as the third frame image. Herein, assuming that the (m+n+1)^{th} frame image is different from the third frame image, buffer the (m+n+1)^{th} frame image.

Repeat this step continuously until the video source image is received completely.

Step 311: Send the buffered images to display device A, display device B, and display device C for displaying.

As can be seen from the above, after the methods in the second and third embodiments of the present invention are used, the requirement that a user watches images with different content of the same source image on different display devices is met, and user experience in using a videoconferencing system is improved.

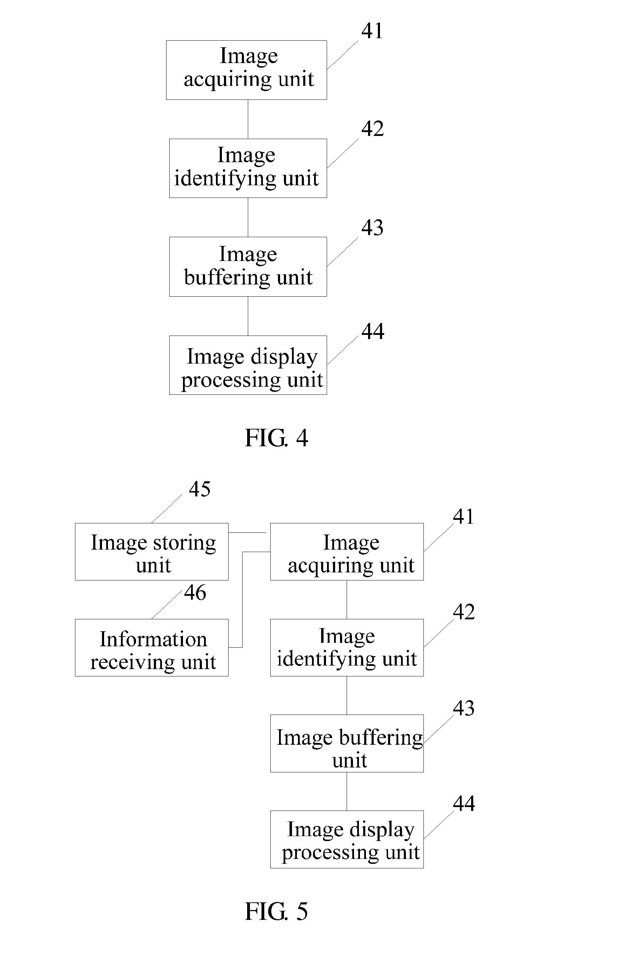

As shown in FIG. 4, an embodiment of the present invention further provides an apparatus for processing an image display, including:
an image acquiring unit 41, configured to acquire each frame image of a video source image;
an image identifying unit 42, configured to identify whether a current frame image is the same as a previous relevant frame image of the current frame image among each frame image of the video source image; an image buffering unit 43, configured to buffer the current frame image and the previous relevant frame image when the current frame image is different from the previous relevant frame image; and an image display processing unit 44, configured to send the buffered images to at least two display devices for displaying, respectively.

According to the foregoing descriptions of the method embodiments, the image identifying unit 42 may include: a content detecting module, configured to detect the similarity of content between the current frame image and the previous relevant frame image; and an image identifying module, configured to determine that the current frame image is different from the previous relevant frame image when the similarity is lower than a preset threshold; to determine that the current frame image is the same as the previous relevant frame image when the similarity is not lower than a preset threshold.

Alternatively, the image identifying unit 42 may include: an identification information acquiring module, configured to acquire identification information of the current frame image and identification information of the previous relevant frame image; and an image identifying module, configured to determine that the current frame image is the same as the previous relevant frame image when the identification information of the current frame image is the same as the identification information of the previous relevant frame image; to determine that the current frame image is different from the previous relevant frame image when the identification information of the current frame image is different from the identification information of the previous relevant frame image.

Alternatively, the image identifying unit 42 may include: an invalid-frame detecting module, configured to detect whether an invalid frame image exists between the current frame image and the previous relevant frame image; and an image identifying module, configured to determine that the current frame image is different from the previous relevant frame image when an invalid frame image exists between the current frame image and the previous relevant frame image; to determine that the current frame image is the same as the previous relevant frame image when no invalid frame image exists.

In addition, the image display processing unit 44 is further configured to discard the current frame image when the current frame image is the same as the previous relevant frame image to lower the requirement for bandwidth on the system.

To lower the requirement for bandwidth on the system, as shown in FIG. 5, the apparatus further includes: an image storing unit 45, configured to store each frame image of the video source image; and an information receiving unit 46, configured to receive identification information of each frame image in the video frame image. In this case, the image acquiring unit 41 is specifically configured to acquire each frame image of the video source image from the image storing unit according to the identification information.

As can be seen from the above, after the apparatus in the fourth embodiment of the present invention is used, when the current frame image is different from the previous relevant frame image, the buffered images can be sent to at least two display devices for displaying; that is, when the current frame image is different from the previous relevant frame image, at least two display devices are capable of simultaneously displaying different frame images of the video source image. This meets the requirement that a user watches images with different content of the same video source image on different display devices, and improves user experience in using a videoconferencing system.

Persons of ordinary skill in the art should understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), or a random access memory (Random Access Memory, RAM).

The foregoing descriptions are merely exemplary embodiments of the present invention, but not intended to limit the protection scope of the present invention. Any variation or replacement made by persons skilled in the art within the technical scope disclosed in the present invention shall all fall within the protection scope of the present invention. Therefore, the protection scope of the present invention shall be subject to the protection scope of the appended claims.

## Claims

1. A method for processing an image display, comprising:
acquiring each frame image of a video source image;
identifying whether a current frame image is the same as a previous relevant frame image of the current frame image among each frame image of the video source image;
buffering the current frame image and the previous relevant frame image when the current frame image is different from the previous relevant frame image; and
sending the buffered images to at least two display devices for displaying, respectively.

2. The method according to claim 1, wherein the identifying whether a current frame image is the same as a previous relevant frame image of the current frame image among each frame image of the video source image comprises:
detecting similarity of content between the current frame image and the previous relevant frame image, wherein when the similarity is lower than a preset threshold, the current frame image is different from the previous relevant frame image; when the similarity is not lower than a preset threshold, the current frame image is the same as the previous relevant frame image; or
acquiring identification information of the current frame image and identification information of the previous relevant frame image, wherein when the identification information of the current frame image is the same as the identification information of the previous relevant frame image, the current frame image is the same as the previous relevant frame image; when the identification information of the current frame image is different from the identification information of the previous relevant frame image, the current frame image is different from the previous relevant frame image; or
detecting whether an invalid frame image exists between the current frame image and the previous relevant frame image, wherein when an invalid frame image exists between the current frame image and the previous relevant frame image, the current frame image is different from the previous relevant frame image; when no invalid frame image exists, the current frame image is the same as the previous relevant frame image.

3. The method according to claim 1 or 2, further comprising:
discarding the current frame image when the current frame image is the same as the previous relevant frame image.

4. The method according to claim 1, before the acquiring each frame image of a video source image, further comprising:
storing each frame image of the video source image; and
receiving identification information of each frame image of the video source image;
wherein:
the acquiring each frame image of a video source image comprises:
acquiring each frame image of the video source image according to the identification information.

5. An apparatus for processing an image display, comprising:
an image acquiring unit, configured to acquire each frame image of a video source image;
an image identifying unit, configured to identify whether a current frame image is the same as a previous relevant frame image of the current frame image among each frame image of the video source image;
an image buffering unit, configured to buffer the current frame image and the previous relevant frame image when the current frame image is different from the previous relevant frame image; and
an image display processing unit, configured to send the buffered images to at least two display devices for displaying, respectively.

6. The apparatus according to claim 5, wherein the image identifying unit comprises:
a content detecting module, configured to detect similarity of content between the current frame image and the previous relevant frame image; and
an image identifying module, configured to determine that the current frame image is different from the previous relevant frame image when the similarity is lower than a preset threshold; to determine that the current frame image is the same as the previous relevant frame image when the similarity is not lower than a preset threshold.

7. The apparatus according to claim 5, wherein the image identifying unit comprises:
an identification information acquiring module, configured to acquire identification information of the current frame image and identification information of the previous relevant frame image; and
an image identifying module, configured to determine that the current frame image is the same as the previous relevant frame image when the identification information of the current frame image is the same as the identification information of the previous relevant frame image; to determine that the current frame image is different from the previous relevant frame image when the identification information of the current frame image is different from the identification information of the previous relevant frame image.

8. The apparatus according to claim 5, wherein the image identifying unit comprises:
an invalid-frame detecting module, configured to detect whether an invalid frame image exists between the current frame image and the previous relevant frame image; and
an image identifying module, configured to determine that the current frame image is different from the previous relevant frame image when an invalid frame image exists between the current frame image and the previous relevant frame image; to determine that the current frame image is the same as the previous relevant frame image when no invalid frame image exists.

9. The apparatus according to any one of claims 5 to 8, wherein the image display processing unit is further configured to discard the current frame image when the current frame image is the same as the previous relevant frame image.

10. The apparatus according to claim 9, further comprising:
an image storing unit, configured to store each frame image of the video source image; and
an information receiving unit, configured to receive identification information of each frame image of the video source image;
wherein the image acquiring unit is specifically configured to acquire each frame image of the video source image from the image storing unit according to the identification information.
